# EUROPEAN PATENT APPLICATION

(11) **EP 0 748 825 A2**
(43) Date of publication of application: **18.12.1996**
(21) Application number: 96304368.2
(22) Date of filing: 11.06.1996
(51) Int. Cl.: C08F 210/18, C08F 4/642, C08F 4/68, C08F 2/06, C08F 2/44

(54) **Ethylene-alpha-olefin-non-conjugated diene copolymer rubber**

(30) Priority: 12.06.1995 JP 169296/95
(71) Applicant: JAPAN SYNTHETIC RUBBER CO., LTD., Tokyo 104 (JP)
(72) Inventor: Morikawa, Akihiko, Yokkaichi-shi (JP); Tsutsumi, Masami, Yokkaichi-shi (JP); Shimakage, Masashi, Yokkaichi-shi (JP); Mori, Yoji, Yokkaichi-shi (JP)
(74) Representative: Lamb, Martin John Carstairs

(57) **Abstract**

An ethylene-α-olefin-non-conjugated diene copolymer rubber which has a Mooney viscosity (ML₁₊₄, 100°C) of 5 to 90, an ethylene/α-olefin weight ratio of 70/30 to 90/10, a non-conjugated diene content of 2 to 50 in terms of iodine value, and a content of cyclohexane-insolubles of 4 to 50% by weight, wherein the peak of melting point of ethylene crystal portion as measured by a differential scanning calorimeter (DSC) is 40-100°C. Said copolymer rubber is high in fluidity, strength and hardness and can be molded into a vulcanizate excellent in compression set at high temperatures.

## Description

### BACKGROUND OF THE INVENTION

This invention relates to an ethylene-α-olefin-non-conjugated diene copolymer rubber which has a high fluidity during processing and shows a high strength, a high hardness and an excellent compression set at high temperatures after vulcanization.

Ethylene-α-olefin-non-conjugated diene copolymer rubbers are excellent in characteristics such as heat resistance, ozone resistance, weather resistance and the like and have been used in many fields in which automobile parts are centered.

In recent years, the requirement for a low cost of automobile has made severer the demand for miniaturization and thinning of solid and sponge articles in automobile parts in which articles an ethylene-α-olefin-non-conjugated diene copolymer rubber is used. However, there is a problem that the miniaturization and thinning of automobile parts result in a reduction of strength and rigidity of final product, so that an improvement thereof has been desired.

When, for solving the above problem, a high molecular weight ethylene-α-olefin-non-conjugated diene copolymer rubber which exhibits a high strength is previously used, the product can be thinned and miniaturized while the strength is kept, and when a relatively large amount of a filler is incorporated into the copolymer rubber, the strength and rigidity can be maintained. However, both cases have a problem in that the composition obtained is markedly inferior in fluidity.

In other words, in the prior art, there have been obtained no ethylene-α-olefin-non-conjugated diene copolymer rubber vulcanizates which satisfy high strength, high hardness and high fluidity.

### SUMMARY OF THE INVENTION

The present inventors have made extensive research for solving the above problems and have consequently found that the above problems can be solved by use of a specific ethylene-α-olefin-non-conjugated diene copolymer rubber having a high crystallinity.

According to this invention, there is provided an ethylene-α-olefin-non-conjugated diene copolymer rubber which has a Mooney viscosity (ML₁₊₄, 100°C) of 5 to 90, an ethylene/α-olefin weight ratio of 70/30 to 90/10, a non-conjugated diene content of 2 to 50 in terms of iodine value, wherein the content of cyclohexane-insolubles is 4 to 50% by weight and the peak of melting point of the ethylene crystal portion is 40 to 100°C as measured by a differential scanning calorimeter (DSC).

### DETAILED DESCRIPTION OF THE INVENTION

### Ethylene-α-olefin-non-conjugated diene copolymer rubber

The Mooney viscosity (ML₁₊₄, 100°C) of the copolymer rubber is 5 to 90, preferably 20 to 80. When the Mooney viscosity is less than 5, the tensile strength and compression set of the vulcanized rubber obtained become low, and when it exceeds 90, the fluidity becomes inferior and the kneading processibility and extrusion processibility are deteriorated.

The ethylene/α-olefin weight ratio of the copolymer rubber is 70/30 to 90/10, preferably 75/25 to 85/15. When the ethylene content exceeds 90% by weight, the compression set at low temperatures of a vulcanized rubber in which the copolymer rubber of this invention is used is deteriorated, and when the ethylene content is less than 70% by weight, a high crystallinity cannot be imparted to the product and the strength and hardness become inferior.

The α-olefin used in the copolymer rubber is an α-olefin having 3 or more carbon atoms, and includes specifically propylene, 1-butene, 4-methyl-1-pentene, 1-hexene, 1-octene, 1-decene, 1-dodecene, 1-tetradecene, 1-hexadecene, 1-octadecene, 1-eicocene and the like.

The non-conjugated diene used in the copolymer rubber includes 1,4-hexadiene, 1,6-octadiene, 1,7-octadiene, 1,8-nonadiene, 1,9-decadiene, 2-methyl-1,5-hexadiene, 6-methyl-1,5-hexadiene, 7-methyl-1,6-octadiene, cyclohexadiene, dicyclopentadiene, methyltetrahydroindene, 5-vinyl-2-norbornene, 5-ethylidene-2-norbornene, 5-methylene-2-norbornene and the like, among which 5-ethylidene-2-norbornene is preferred.

The content of the non-conjugated diene in the copolymer rubber is 2 to 50, preferably 5 to 30 in terms of iodine value. When the iodine value is less than 2, the compression set of a vulcanized rubber in which the copolymer rubber of this invention is used is deteriorated. On the other hand, when the iodine value exceeds 50, the kneading processibility and extrusion processibility become inferior.

The content of cyclohexane-insolubles in the copolymer rubber is 4 to 50% by weight, preferably 5 to 20% by weight. When the content of cyclohexane-insolubles is less than 4% by weight, the hardness and strength of a rubber vulcanizate obtained become low, while when the content exceeds 50% by weight, the kneading processibility and rolling-processibility become inferior.

The peak of melting point of ethylene crystal portion of the copolymer rubber as measured by a differential scanning calorimeter (DSC) is 40 to 100°C, preferably 40 to 80°C. When the peak of melting point is lower than 40°C, the hardness and strength of a vulcanizate become low, while when the peak exceeds 100°C, the kneading processibility and rolling processibility become inferior.

The copolymer rubber of this invention can be produced by a conventional polymerization method. In other words, it can be produced by polymerizing ethylene, an α-olefin, a non-conjugated diene with a Ziegler catalyst consisting of a hydrocarbon solvent-soluble vanadium compound and an organoaluminum compound in a solvent while feeding hydrogen as a molecular weight modifier.

Alternatively, the copolymer rubber can be produced by polymerizing ethylene, an α-olefin and a non-conjugated diene in the presence of a catalyst consisting of a zirconium compound having as a ligand a group having a conjugate π electron and an aluminoxane compound or a boron compound having a fluorinated aromatic substituent in the same manner as above except the catalyst.

The hydrocarbon solvent-soluble vanadium compound is preferably VOCl₃, VCl₄, or a reaction product of VOCl₃ and/or VCl₄ with an alcohol. As the alcohol, there are used methanol, ethanol, n-propanol, isopropanol, n-butanol, sec-butanol, tert-butanol, n-hexanol, n-octanol, 2-ethylhexanol, n-decanol, n-dodecanol and the like; however, preferably used are alcohols having 3 to 8 carbon atoms.

The organoaluminum compound includes triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride and the like. These organoaluminum compounds can be used alone or in admixture of two or more. Particularly preferable are ethylaluminum sesquichloride, butylaluminum sesquichloride, a mixture of ethylaluminum sesquichloride and triisobutylaluminum, and a mixture of butylaluminum sesquichloride and triisobutylaluminum.

Specific examples of the above zirconium compound having as a ligand a group having a conjugate π electron include bis(cyclopenadienyl)zirconium dichloride, bis(cyclopentadienyl)zirconium dibromide, bis(cyclopentadienyl)zirconiumdimethyl, bis(cyclopentadienyl)zirconiumdiphenyl, dimethylsilylbis(cyclopentadienyl)zirconium dichloride, dimethylsilylbis(cyclopentadienyl)zirconiumdimethyl, methylenebis(cyclopentadienyl)zirconium dichloride, ethylenebis(cyclopentadienyl)zirconium dichloride, bis(indenyl)zirconium dichloride, bis(indenyl)zirconiumdimethyl, dimethylsilylbis(indenyl)zirconium dichloride, methylenebis(indenyl)zirconium dichloride, bis(4,5,6,7-tetrahydroindenyl)zirconium dichloride, bis(4,5,6,7-tetrahydroindenyl)zirconiumdimethyl, dimethylsilyl-bis(4,5,6,7-tetrahydro-1-indenyl)zirconium dichloride, dimethylsilylbis(4,5,6,7-tetrahydro-1-indenyl)zirconiumdimethyl, ethylenebis(4,5,6,7-tetrahydro-1-indenyl)zirconium dichloride, bis(methylcyclopentadienyl)zirconium dichloride, bis(methylcyclopentadienyl)zirconiumdimethyl, dimethylsilylbis(3-methyl-1-cyclopentadienyl)zirconium dichloride, methylene bis(3-methyl-1-cyclopentadienyl)zirconium dichloride, bis(tert-butylcyclopentadienyl)zirconium dichloride, dimethylsilylbis(3-tert-butyl-1-cyclopentadienyl)zirconium dichloride, bis(1,3-dimethylcyclopentadienyl)zirconium dichloride, dimethylsilylbis(2,4-dimethyl-1-cyclopentadienyl)zirconium dichloride, bis(1,2,4-trimethylcyclopentadienyl)zirconium dichloride, dimethylsilylbis(2,3,5-trimethyl-1-cyclopentadienyl)zirconium dichloride, bis(fluorenyl)zirconium dichloride, dimethylsilylbis(fluorenyl)zirconium dichloride, (fluorenyl)(cyclopentadienyl)zirconium dichloride, dimethylsilyl(fluorenyl)(cyclopentadienyl)zirconium dichloride, (tert-butylamido)(1,2,3,4,5-pentamethylcyclopentadienyl)zirconium dichloride, dimethylsilyl(tert-butylamido)(2,3,4,5-tetramethyl-1-cyclopentadienyl)zirconium dichloride, methylene(tert-butylamido)(2,3,4,5-tetramethyl-1-cyclopentadienyl)zirconium dichloride, (phenoxy)(1,2,3,4,5-pentamethylcyclopentadienyl)zirconium dichloride, dimethylsilyl(o-phenoxy)(2,3,4,5-tetramethyl-1-cyclopentadienyl)zirconium dichloride, methylene(o-phenoxy)(2,3,4,5-tetramethyl-1-cyclopentadienyl)zirconium dichloride, ethylene(o-phenoxy)(2,3,4,5-tetramethyl-1-cyclopentadienyl)zirconium dichloride, bis(dimethylamido)zirconium dichloride, bis(diethylamido)zirconium chloride, bis(di-tert-butylamido)zirconium dichloride, dimethylsilylbis(methylamido)zirconium dichloride, dimethylsilylbis(tert-butylamido)zirconium dichloride and the like and those compounds whose zirconium has been substituted by titanium or hafnium. However, these examples are not limitative. These transition metal compounds may be used alone or in combination of two or more.

Examples of the aluminoxane compound are linear aluminoxane compounds represented by the general formula (I) and/or cyclic aluminoxane compounds represented by the general formula (II):

R₂ - Al - O - [Al(R) - O]ₙ - Al - O - R₂ (I)

[ Al(R) - O]ₙ₊₂ (II)

wherein the R groups may be the same as or different from one another and each represents an alkyl group having 1 to 20 carbon atoms, an aryl group having 6 to 40 carbon atoms, an alkylaryl group having 7 to 40 carbon atoms or an aralkyl group having 7 to 40 carbon atoms, preferably methyl group or ethyl group, and particularly preferably methyl group; n is an integer of 2 to 50, preferably 4 to 30. These aluminoxane compounds may be used alone or in combination of two or more.

The boron compounds having a fluorinated aromatic substituent used in this invention include specifically trimethylammonium tetraphenylborate, triethylammonium tetraphenylborate, tri-n-butylammonium tetraphenylborate, methyl(di-n-butyl)ammonium tetraphenylborate, dimethylanilinium tetraphenylborate, methylpyridinium tetraphenylborate, methyl(2-cyanopyridinium) tetraphenylborate, methyl(4-cyanopyridinium) tetraphenylborate, trimethylammonium tetrakis(pentafluorophenyl)borate, triethylammonium tetrakis(pentafluorophenyl)borate, tri-n-butylammonium tetrakis(pentafluorophenyl)borate, methyl(di-n-butyl)ammonium tetrakis(pentafluorophenyl)borate, dimethylanilinium tetrakis(pentafluorophenyl)borate, methylpyridinium tetrakis(pentafluorophenyl)borate, methyl(2-cyanopyridinium) tetrakis(pentafluorophenyl)borate, methyl(4-cyanopyridinium) tetrakis(pentafluorophenylphenyl)borate, dimethylanilinium tetrakis[bis(3,5-ditrifluoromethyl)phenyl]borate, ferrocenium tetraphenylborate, silver tetraphenylborate, ferrocenium tetrakis(pentafluorophenyl)borate and the like. However, these examples are not limitative. These ionic compounds may be used alone or in combination of two or more.

As the solvent, hydrocarbon compounds are used, and examples thereof include n-pentane, n-hexane, n-heptane, n-octane, isooctane, cyclohexane, toluene, xylene, methyl chloride, methylene chloride, chlorobenzene and the like.

The ethylene-α-olefin-non-conjugated diene copolymer rubber used in this invention may, if necessary, be compounded with a filler, a softening agent, a foaming agent, a vulcanizing agent or the like and then cross-linked in accordance with a generally used method, thereby producing a vulcanized rubber.

The filler to be compounded includes specifically carbon blacks such as SRF, GPF, FEF, HAF, ISAF, SAF, FT, MT and the like;and inorganic fillers such as finely divided silicic acid, heavy calcium carbonate, light calcium carbonate, magnesium carbonate, clay, talc, and the like, and these are preferably used.

The amount of the filler added is, in many cases, in the range of 30 to 200 parts by weight per 100 parts by weight of the copolymer rubber.

The softening agent includes those which are usually used in rubbers, for example, process oils such as aromatic oil, naphthenic oil, paraffinic oil and the like; vegetable oils such as coconut oil and the like; etc. Preferred are process oils, among which paraffinic oils are particularly preferable.

The amount of the softening agent added is at least 20 parts by weight per 100 parts by weight of the copolymer rubber.

The foaming agent includes inorganic foaming agents such as ammonium carbonate, sodium bicarbonate, anhydrous sodium nitrate and the like; and organic foaming agents such as dinitrosopentamethylenetetramine, N,N'-dimethyl-N,N'-dinitrosoterephthalamide, benzenesulfonyl hydrazide, p,p'-oxybis(benzenesulfonyl hydrazide), 3,3'-disulfonehydrazidodiphenylsulfone, azoisobutyronitrile, azobisformamide and the like.

Also, the foaming agent can be used together with a foaming aid of the urea type, the organic acid type or the metal salt type.

The amount of the foaming agent added is 0.5 to 20 parts by weight, preferably 1 to 15 parts by weight, per 100 parts by weight of the copolymer rubber, and the amount of the foaming aid added is 1 to 20 parts by weight per 100 parts by weight of the copolymer rubber.

As the vulcanizing agent, there are used sulfurs such as powdery sulfur, precipitated sulfur, colloidal sulfur, insoluble sulfur and the like; inorganic vulcanizing agents such as sulfur chloride, selenium, tellurium and the like; sulfur-containing organic compounds such as morpholine disulfide, alkylphenol disulfides, thiuram disulfides, dithiocarbamic acid salts and the like; organic peroxides such as l,l-di-tert-butylperoxy-3,3,5-trimethylcyclohexane, di-tert-butyl peroxide, dicumyl peroxide, tertbutylcumyl peroxide, 2,5-dimethyl-2,5-di(tertbutylperoxy)hexane, 1,3-bis-(tert-butylperoxyisopropyl)benzene and the like, and sulfur is used in a proportion of 0.1 to 10 parts by weight, preferably 0.5 to 5 parts by weight, per 100 parts by weight of the copolymer rubber.

When sulfur is used as a vulcanizing agent, there can be used, if necessary, an accelerator and an activator.

The accelerator includes aldehyde ammonias such as hexamethylenetetramine and the like; guanidines such as diphenyl guanidine, di(o-tolyl) guanidine, o-tolyl biguanide and the like; thioureas such as thiocarbanilide, di(o-tolyl)thiourea, N,N'-diethylthiourea, tetramethylthiourea, trimethylthiourea, dilaurylthiourea and the like; thiazoles such as mercaptobenzothiazole, dibenzothiazole disulfide, 2-(4-morpholinothio)benzothiazole, 2-(2,4-dinitrophenyl)mercaptobenzothiazole, N,N'-diethylthiocarbamoylthio)benzothiazole and the like; sulfenamides such as N-tert-butyl-2-benzothiadisulfenamide, N,N'-dicyclohexyl-2-benzothiadisulfenamide, N,N'-diisopropyl-2-benzothiazylsulfenamide, N-cyclohexyl-2-benzothiazylsulfenamide and the like; thiurams such as tetramethylthiuram disulfide, tetraethylthiuram disulfide, tetrabutylthiuram disulfide, tetramethylthiuram monosulfide, dipentamethylenethiuram tetrasulfide and the like; carbamic acid salts such as zinc dimethylthiocarbamate, zinc diethylthiocarbamate, zinc di-n-butylthiocarbamate, zinc ethylphenyldithiocarbamate, sodium dimethyldithiocarbamate, copper dimethyldithiocarbamate, tellurium dimethylthiocarbamate, iron dimethylthiocarbamate and the like; xanthogenic acid salts such as zinc butylthioxanthogenate and the like; etc.

These accelerators are used in a proportion of 0.1 to 20 parts by weight, preferably 0.2 to 10 parts by weight, per 100 parts by weight of the copolymer rubber of this invention.

As the activator, there are used metal oxides such as magnesium oxide, zinc oxide, litharge, red lead, white lead and the like; organic acids such as stearic acid, oleic acid and the like; and organic acid salts such as zinc stearate and the like. Particularly preferable are zinc flower and stearic acid.

Usually, these activators are used in a proportion of 0.5 to 20 parts by weight per 100 parts by weight of the copolymer rubber of this invention.

When a peroxide is used as a vulcanizing agent, there can be used, as a vulcanizing aid, sulfur; sulfur compounds such as dipentamethylenethiuram tetrasulfide and the like; polyfunctional monomers such as polyethylene dimethacrylate, divinylbenzene, diallyl phthalate, triallyl cyanurate, meta-phenylene bismaleimide, toluylene bismaleimide and the like; oxime compounds such as p-quinoneoxime, p,p'-benzoylquinoneoxime and the like alone or in admixture of two or more.

Moreover, antioxidants and other additives which are usually used in rubbers may be added in any proportions.

Moreover, the copolymer rubber of this invention can be compounded with butyl rubber, natural rubber, polyisoprene rubber, polybutadiene rubber, styrene-butadiene copolymer, acrylonitrile-butadiene copolymer, other ethylene-α-olefin-non-conjugated diene copolymers, ethylene-α-olefin polymers, polyethylene or polypropylene.

In the production of the copolymer rubber of this invention, there can be used a kneader, an extruder and a vulcanizing equipment which have heretofore been known. The method and order of incorporating a filler, a softening agent, a foaming agent or a vulcanizing agent into the copolymer rubber of this invention are not critical; however, the copolymer rubber, the filler, the softening agent and the like are mixed by a Banbury mixer or the like and thereafter the vulcanizing agent, the foaming agent, the foaming aid and the like may be added thereto using a roll or the like.

The resulting compound is placed in a mold and heated to elevate the temperature in such a manner as used in a conventional production of a vulcanized rubber to effect foaming and vulcanization. Alternatively, the compound is molded into any shape by use of an extrusion molding machine, heated in a vulcanizer to be vulcanized, whereby a vulcanized rubber can be produced.

The ethylene-α-olefin-non-conjugated diene copolymer rubber of this invention can be suitably used as various wires, electrically insulating parts, roofings, tubes, belts, civil engineering and construction materials, rolls, spongy products, and automobile parts such as weatherstrip, radiator hose, heater hose, brake hose, protector, mufflerhanger, radiator packing, brake cup, packing for lamp, bumper and the like.

By use of the ethylene-α-olefin-non-conjugated diene copolymer rubber of this invention, a vulcanized rubber composition is obtained which has a high fluidity, a high strength and a high hardness.

### DESCRIPTION OF THE PREFERRED EMBODIMENTS

Examples and Comparative Examples are shown blow to explain this invention in more detail; however, this invention should not be construed to be limited thereto.

Incidentally, in the Examples and the Comparative Examples, various physical properties were measured by the following methods:

### (1) Propylene content

Measured by an infrared absorption spectrum method.

### (2) Iodine value

Measured by an infrared absorption spectrum method.

### (3) Content of cyclohexane-insolubles

250 mg of the starting rubber which had not been compounded with any compounding agent was cut so that the length of one side became 1 mm or less, immersed in 100 ml of cyclohexane and allowed to stand in a constant temperature bath at 30°C for 48 hours. Thereafter, the resulting solution was filtered through a stainless steel wire gauze of 80 mesh and the insolubles obtained were vacuum-dried at 105°C for one hour and then weighed. This amount of insolubles was divided by the weight of the starting rubber and the value obtained was indicated as the content of cyclohexane-insolubles (% by weight).

### (4) Melting point of ethylene crystal portion

Using DSC220C manufactured by Seiko Denshi K. K., a sample was heated at 20°C/min from room temperature to 160°C, kept at 160°C for 10 min, thereafter, cooled at 10°C/min to -110°C, kept at -110°C for 10 min, and thereafter heated at 20°C/min to elevate the temperature to 160°C. From the endothermic peak obtained at the second temperature elevation, the melting point was determined in accordance with JISK7121.

### (5) Mooney viscosity (ML₁₊₄, 100°C)

Measured in accordance with JISK6300 under the conditions that the measurement temperature was 100°C, the preheating time was 1 minute and the measurement time was 4 minutes.

### (6) Mooney Scorch test

Measured in accordance with JISK6300 at 125°C.

### (7) Tensile test

Measured in accordance with JISK6301 using a No. 3 type test piece.

### (8) Hardness test

Measured in accordance with JISK6301 using an A type tester.

### (9) Compression set test

Measured in accordance with JISK6301 under the conditions of 70°C x 22 hours.

Examples of processes for producing a polymer are shown below.

### Polymer A-1

To a continuous reactor having a capacity of 40 liters and equipped with a feed opening at the bottom and equipped with a discharge opening in the upper part were fed, at a feeding temperature of -30°C, n-hexane at a feeding rate of 230 liters/hour, ethylene at a feeding rate of 11.1 kg/hour, propylene at a feeding rate of 9.8 kg/hour, 5-ethylidene-2-norbornene (ENB) at a feeding rate of 0.90 kg/hour and hydrogen at a feeding rate of 2.5 g/hour.

A vanadium catalyst component which had been previously prepared outside the reactor by adding 1-butanol to vanadium trichloride (VOCl₃) at a proportion of 1.5 moles of 1-butanol per mole of vanadium trichloride and subjecting the resulting mixture to dehydrochlorination with a nitrogen gas, was fed to the reactor in such a proportion that the vanadium compound concentration became 0.21 millimole/liter of hexane.

As the organoaluminum compound, ethylaluminum sesquichloride was added in a proportion of 0.53 millimole/liter of hexane, and the resulting mixture was subjected to polymerization reaction at a polymerization temperature of 50°C at a polymerization pressure of 10 kg/cm²G.

To the reaction mixture taken out of the reactor was added a small amount of water as a reaction terminator, the remaining catalyst was removed, a small amount of an antioxidant was added to the reaction mixture freed from the catalyst, and thereafter, the solvent was put out of the system by a steam stripping, after which the residue was dried in the finishing step.

The raw rubber characteristics of the rubber obtained were such that the Mooney viscosity (ML₁₊₄, 100°C) was 42, the ethylene/propylene weight ratio was 79/21 and the iodine value was 20.

### Polymer B-2

In the same manner as in Polymer A-1, except that ethylaluminum sesquichloride was added in a proportion of 1.59 millimoles/liter of hexane, polymerization reaction and drying were conducted.

The raw rubber characteristics of the rubber obtained were such that the Mooney viscosity (ML₁₊₄, 100°C) was 41, the ethylene/propylene weight ratio of 75/25 and the iodine value was 18.

### Other Polymers

Polymer A-2 was prepared in a manner similar to that in Polymer A-1, and each of Polymers B-1, B-3 and B-4 was prepared in a manner similar to that in Polymer B-2.

### Examples 1 and 2 and Comparative Examples 1 to 4

The copolymer rubber shown in Table 1 was compounded with the components shown in Table 2 other than sulfur and accelerators in the amounts shown in Table 2 using a banbary type internal mixer (the capacity was 1.7 liters) set at 60°C, at 60 rpm for 200 seconds. Then the sulfur and accelerators were mixed with the resulting compound on a 10-inch roll kept at 50°C for 5 minutes to obtain a compound.

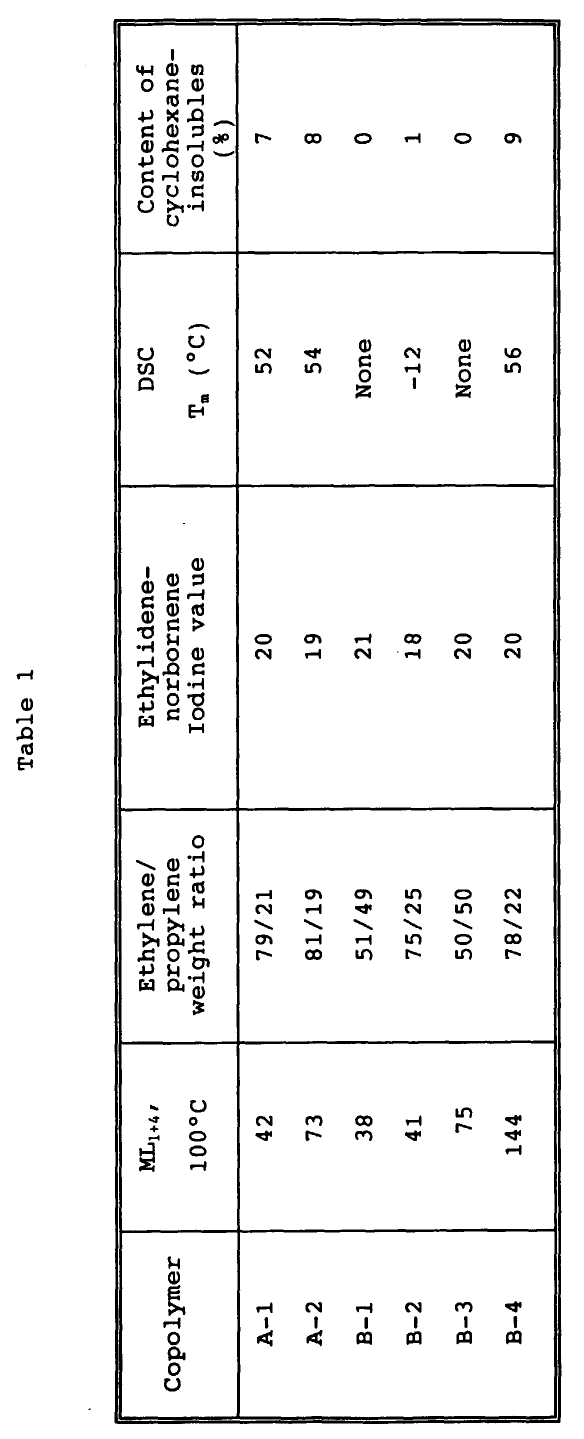

**Table 2**

| Components compounded | Parts by weight |
|---|---|
| Copolymer rubber | 100 |
| Carbon black^{*1} | 120 |
| Heavy calcium carbonate^{*2} | 50 |
| Paraffinic oil^{*3} | 50 |
| Zinc oxide | 5 |
| Stearic acid | 1 |
| Sulfur | 1.5 |
| Accelerator M^{*4} | 0.5 |
| Accelerator TMTD^{*5} | 0.5 |
| Accelerator BZ^{*6} | 0.5 |
| Total | 329.0 |

| | |
|---|---|
| *1: ASAHI #60 mfd. by ASAHI CARBON CO., LTD. | |
| *2: Super S mfd. by MARUO CALCIUM CO., LTD. | |
| *3: Diana Process Oil PW380 mfd. by Idemitsu Kosan Co., Ltd. | |
| *4: Mercaptobenzothiazole | |
| *5: Tetramethylthiuram disulfide | |
| *6: Zinc dibutyldithiocarbamate | |

Subsequently, the final compound was heated in a hot press heated at 170°C at a press pressure of 100 kgf/cm² for 15 minutes to prepare a vulcanized sheet and a compression set test sample, which were then subjected to measurement to obtain physical properties of vulcanizates shown in Table 3.

Incidentally, Mooney viscosity and Mooney Scorch measurements were carried out by using the final compound before the hot press.

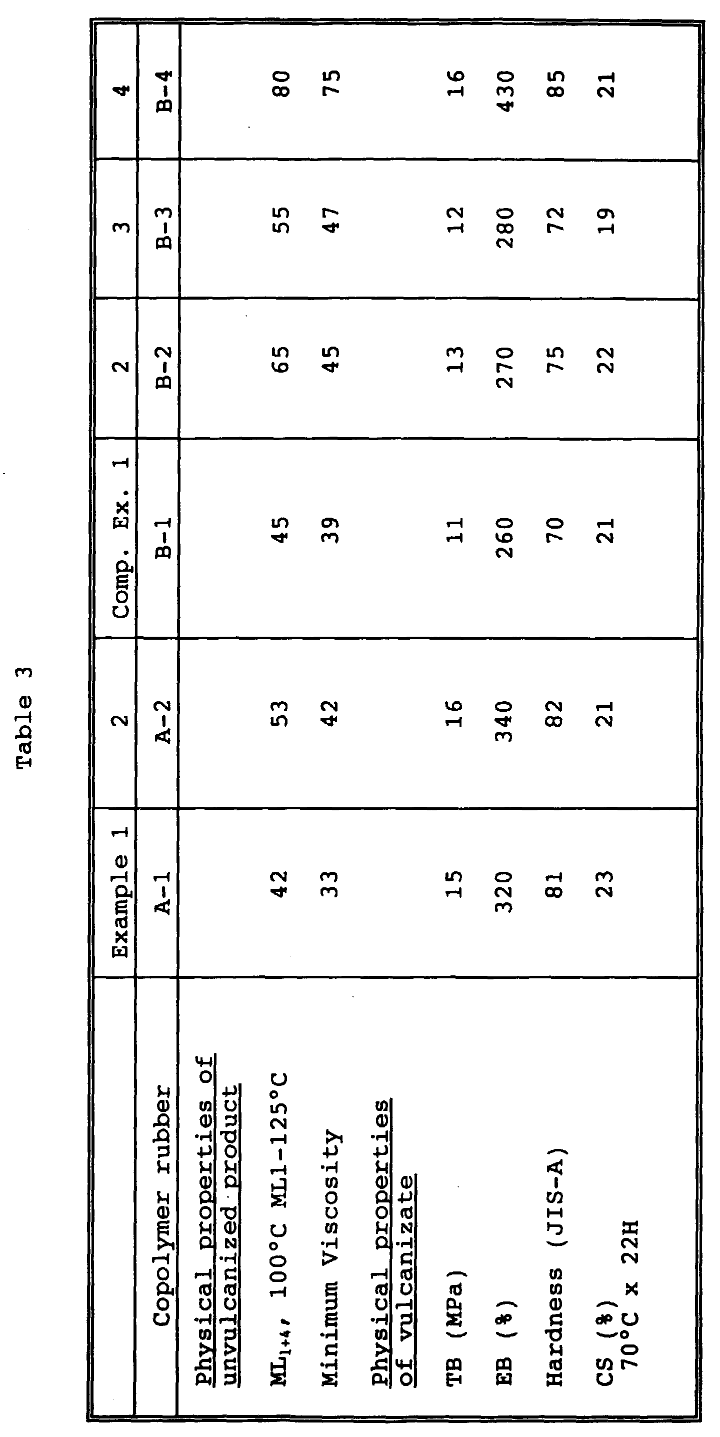

All the samples of Examples 1 and 2 have a high strength, a high hardness and an excellent fluidity (Vm value was small) and are excellent in low-temperature properties.

In Comparative Examples 1 and 3, the ethylene/propylene weight ratios in the copolymer rubber are outside the range specified in this invention, both the melting point and the content of cyclohexane-insolubles are low and the crystallinity is inferior, so that the strength is inferior and the hardness is low.

In Comparative Example 2, the ethylene/propylene weight ratio in the copolymer rubber falls within the range specified in this invention, but both the melting point and the content of cyclohexane-insolubles are low, and the crystallinity is inferior, so that the strength is inferior and the hardness is low.

In Comparative Example 4, the Mooney viscosity (ML₁₊₄, 100°C) is outside the range specified in this invention, so that the fluidity is inferior.

## Claims

1. An ethylene-α-olefin-non-conjugated diene copolymer rubber which has a Mooney viscosity (ML₁₊₄, 100°C) of 5 to 90, an ethylene/α-olefin weight ratio of 70/30 to 90/10, a non-conjugated diene content of 2 to 50 in terms of iodine value, and a content of cyclohexane-insolubles of 4 to 50% by weight, wherein the peak of melting point of ethylene crystal portion as measured by a differential scanning calorimeter (DSC) is 40°C to 100°C.

2. The copolymer rubber according to Claim 1, wherein the Mooney viscosity (ML₁₊₄, 100°C) is 20 to 80.

3. The copolymer rubber according to Claim 1, wherein the ethylene/α-olefin weight ratio is 70/25 to 85/15.

4. The copolymer rubber according to Claim 1, wherein the α-olefin is an α-olefin having 3 or more carbon atoms.

5. The copolymer rubber according to Claim 4, wherein the α-olefin having 3 or more carbon atoms is selected from the group consisting of propylene, 1-butene, 4-methyl-1-pentene, 1-hexene, 1-octene, 1-decene, 1-dodecene, 1-tetradecene, 1-hexadecene, 1-octadecene, and 1-eicocene.

6. The copolymer rubber according to Claim 1, wherein the non-conjugated diene is a non-conjugated diene selected from the group consisting of 1,4-hexadiene, 1,6-octadiene, 1,7-octadiene, 1,8-nonadiene, 1,9-decadiene, 2-methyl-1,5-hexadiene, 6-methyl-1,5-hexadiene, 7-methyl-1,6-octadiene, cyclohexadiene, dicyclopentadiene, methyltetrahydroindene, 5-vinyl-2-norbornene, 5-ethylidenenorbornene and 5-methylene-2-norbornene.

7. The copolymer rubber according to Claim 1, wherein the iodine value is 5 to 30.

8. The copolymer rubber according to Claim 1, wherein the content of cyclohexane-insolubles is 5 to 20% by weight.

9. The copolymer rubber according to Claim 1, wherein the peak of melting point of ethylene crystal portion as measured by a differential scanning calorimeter (DSC) is 40°C to 80°C.

10. The copolymer rubber according to Claim 1, which is a copolymer obtained by polymerizing ethylene, an α-olefin and a non-conjugated diene with a Ziegler catalyst consisting of a hydrocarbon solvent-soluble vanadium compound and an organoaluminum compound in a solvent.

11. The copolymer rubber according to Claim 10, wherein the hydrocarbon solvent-soluble vanadium compound is VOCl₃, VCl₄ or a reaction product of an alcohol with at least one member selected from VOCl₃ and VCl₄.

12. The copolymer rubber according to Claim 11, wherein the alcohol is an alcohol selected from the group consisting of methanol, ethanol, n-propanol, isopropanol, n-butanol, sec-butanol, tert-butanol, n-hexanol, n-octanol, 2-ethylhexanol, n-decanol and n-dodecanol.

13. The copolymer rubber according to Claim 10, wherein the organoaluminum compound is a compound selected from the group consisting of triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride and butylaluminum dichloride.

14. The copolymer rubber according to Claim 1, which is a copolymer obtained by polymerizing ethylene, an α-olefin and a non-conjugated diene in a solvent in the presence of a catalyst consisting of a zirconium compound having as a ligand a group having a conjugate π electron and an aluminoxane compound or a boron compound having a fluorinated aromatic substituent.

15. The copolymer rubber according to Claim 14, wherein the aluminoxane compound is at least one compound selected from the group consisting of linear aluminoxanes represented by the following general formula (1) and cyclic aluminoxanes represented by the following general formula (2):
R₂ - Al - O - (Al(R) - O)ₙ - Al - O - R₂ (1)
(Al(R) - O)ₙ₊₂ (2)
wherein the R groups may be the same as or different from one another, and each represents an alkyl group having 1 to 20 carbon atoms, an aryl group having 6 to 40 carbon atoms, an alkylaryl group having 7 to 40 carbon atoms or an aralkyl group having 7 to 40 carbon atoms and n is an integer of 2 to 50.

16. The copolymer rubber according to Claim 14, wherein the solvent is a hydrocarbon compound selected from the group consisting of n-pentane, n-hexane, n-heptane, n-octane, isooctane, cyclohexane, toluene, xylene, methyl chloride, methylene chloride and chlorobenzene.

17. The copolymer rubber according to Claim 1, which further comprises a filler in an amount of 30 to 200 parts by weight per 100 parts by weight of the copolymer rubber.

18. The copolymer rubber according to Claim 1, which further comprises a softening agent in an amount of 20 parts by weight or more per 100 parts by weight of the copolymer rubber.

19. The copolymer rubber according to Claim 1, which further comprises 0.5 to 20 parts by weight of a foaming agent and 1 to 20 parts by weight of a foaming aid, each per 100 parts by weight of the copolymer rubber.

20. The copolymer rubber according to Claim 1, which further comprises a vulcanizing agent selected from the group consisting of sulfur, an inorganic vulcanizing agent, a sulfur-containing organic compound and an organic peroxide.

21. The copolymer rubber according to Claim 20, wherein the vulcanizing agent is sulfur and the amount of the sulfur added is 0.1 to 10 parts by weight per 100 parts by weight of the copolymer rubber.

22. The copolymer rubber according to Claim 21, which further comprises an accelerator in an amount of 0.1 to 20 parts by weight per 100 parts by weight of the copolymer rubber.
